# EUROPÄISCHE PATENTSCHRIFT

(11) **EP 3 359 957 B1**
(45) Veröffentlichungstag und Bekanntmachung des Hinweises auf die Patenterteilung: **09.11.2022**
(21) Anmeldenummer: 16778986.6
(22) Anmeldetag: 01.09.2016
(51) Int. Cl.: G01N 27/07

(54) **GITTERSENSOR-SYSTEM ZUM CHARAKTERISIEREN EINER FLUIDSTRÖMUNG**
GRID SENSOR SYSTEM FOR CHARACTERIZING A FLUID FLOW
SYSTÈME DE CAPTEUR MATRICIEL POUR LA CARACTÉRISATION D'UN FLUX FLUIDIQUE

(30) Priorität: 07.10.2015 DE 102015117084
(43) Veröffentlichungstag der Anmeldung: 15.08.2018
(73) Patentinhaber: Helmholtz-Zentrum Dresden - Rossendorf e.V., 01328 Dresden (DE)
(72) Erfinder: SCHLEICHER, Eckhard, 01219 Dresden (DE); TSCHOFEN, Martin, 01324 Dresden (DE); PIETRUSKE, Heiko, 01796 Pirna (DE)
(86) Internationale Anmeldenummer: PCT/DE2016/100397
(87) Internationale Veröffentlichungsnummer: WO 2017/059840

(56) Entgegenhaltungen:
- DE-A1-102013 203 437
- US-A- 5 287 752
- US-A1- 2011 185 805
- VUONG DUC H ET AL: "A methodology to quantify the uncertainty in liquid holdup measurements with wire mesh sensor", FLOW MEASUREMENT AND INSTRUMENTATION, BUTTERWORTH-HEINEMANN, OXFORD, GB, Bd. 46, 18. September 2015 (2015-09-18), Seiten 18-24, XP029302150, ISSN: 0955-5986, DOI: 10.1016/J.FLOWMEASINST.2015.09.003

## Beschreibung

Die Erfindung betrifft ein Gittersensor-System zum Einbinden in eine von einer Fluidströmung durchströmte Anlage zum Charakterisieren der Fluidströmung. Das Gittersensor-System ist z.B. für industrielle Anwendungen für den Einsatz bei hohen Temperaturen und Drücken geeignet, und kann z.B. zur Untersuchung von Gas- und Flüssigkeitsströmungen, insbesondere von mehrphasigen Fluidströmungen, verwendet werden.

Gittersensoren sind Sensoren mit gitterartig angeordneten Elektroden, die zur ortsaufgelösten und zeitaufgelösten Vermessung der Eigenschaften von Fluidströmungen über deren Strömungsquerschnitt hinweg (z.B. im Querschnitt von Rohrleitungen oder Behältern) dienen. Zumeist werden Gittersensoren eingesetzt, um den lokalen instantanen Gasgehalt in Zweiphasenströmungen zu ermitteln, sie eignen sich aber z.B. auch zur Vermessung von Vermischungsprozessen in einphasigen Medien bei Zugabe von Tracern wie z. B. Salzlösungen.

Gittersensoren weisen gitterartig unter Ausbildung von Kreuzungspunkten angeordnete Elektroden auf, wobei z.B. mehrere in einer ersten Gitterebene verlaufende Elektroden und mehrere in einer zweiten Gitterebene verlaufende Gegenelektroden vorgesehen sein können, die unter Ausbildung von Kreuzungspunkten gitterartig angeordnet sind. Das derart gebildete Elektrodengitter bzw. Messgitter wird in die zu charakterisierende Fluidströmung eingebracht. Das Messprinzip beruht darauf, dass an den Kreuzungspunkten des Elektrodengitters die zwischen den Elektroden des jeweiligen Kreuzungspunktes vorliegende elektrische Leitfähigkeit (oder sonstige elektrische Eigenschaft) erfasst und als Maß für die zum Messzeitpunkt an dem Kreuzungspunkt vorliegenden physikalischen oder chemischen Eigenschaften der Fluidströmung verwendet wird. Gittersensoren können z.B. zum Erfassen der räumlichen Verteilung der elektrischen Leitfähigkeit des Strömungsmediums über den Strömungsquerschnitt hinweg ausgebildet sein, indem die Elektroden der ersten Gitterebene nacheinander mit vorgegebenen Spannungssignalen beaufschlagt werden und an den Gegenelektroden der zweiten Gitterebene das daraus resultierende Stromsignal erfasst und ausgewertet wird. Das Messprinzip kann also z.B. auf der räumlich und zeitlich hochaufgelösten Messung der elektrischen Leitfähigkeit oder Permittivität des Strömungsmediums in einem Messgitter beruhen, welches aus zwei Ebenen (Sende- und Empfangsebene) paralleler Elektroden besteht, die zueinander mit einem kleinen axialen Versatz und in einem Winkel von zumeist 90° angeordnet sind. In den so entstehenden virtuellen Kreuzungspunkten kann durch Multiplexen der Sendeelektroden und gleichzeitig vollparallele Messung an den Empfängerelektroden der Querschnitt komplett abgetastet werden. So kann z.B. bei Vorliegen einer mehrphasigen Fluidströmung mit einer elektrisch leitfähigen Phase und einer elektrisch nicht leitfähigen Phase mittels Erfassens der elektrischen Leitfähigkeit zwischen diesen beiden Phasen unterschieden werden und z.B. mittels des Gittersensors die Anteile dieser beiden Phasen an der Fluidströmung ermittelt werden.

Gittersensoren zum Charakterisieren von Fluidströmungen werden z.B. in DE 196 49 011 A1, DE 10 2005 019 739 B3, DE 10 2006 019 178A1 und DE 10 2007 019 926 A1 beschrieben. Die US 5 287 752 A beschreibt einen Sensor mit zwei Platten, wobei die erste Platte mehrere in Form einer Matrix angeordnete Elektrodensegmente und die zweite Platte mindestens eine durchgehende Elektrode derart aufweist, dass ein Elektrodensegment der ersten Platte mit der Elektrode der zweiten Platte jeweils einen kapazitiven Sensor bildet. In dem Artikel "A methodology to quantify the uncertainty in liquid holdup measurements with wire mesh sensor" (D.H. Vuong et al., Flow Measurement and Instrumentation, Bd. 46, September 2015, Seiten 18 - 24) wird die Messunsicherheit bei experimentellen Untersuchungen von Mehrphasenströmungen mittels Gittersensoren untersucht, wobei unter anderem gefolgert wird, dass die Orientierung des Gittersensors keinen Einfluss auf die Messunsicherheit hat. Die DE 10 2013 203 437 beschreibt eine Anordnung zur Bestimmung der Phasenverteilung in mehrphasigen Medien mit mindestens einer hochleitfähigen Phase. Die US 2011/185 805 A1 beschreibt Venturi-Durchflussmesser mit einem Abschnitt mit variablem Querschnitt.

Herkömmlich wird zum Einbinden eines Gittersensors in eine strömungsführende Anlage (als Beispiel in eine strömungsführende Rohrleitung) der Gittersensor zwischen ein zuführendes Rohrsegment und ein abführendes Rohrsegment der strömungsführenden Rohrleitung geklemmt, z.B. zwischen einen Flansch des zuführenden Rohrsegments und einen Flansch des abführenden Rohrsegments. Zum Sicherstellen der Dichtheit ist der Gittersensor einem hohen Klemmdruck ausgesetzt, was z.B. aufgrund der damit einhergehenden Materialbelastung nachteilig sein kann. Zum Entfernen des Gittersensors aus der Anlage (z.B. zu Austauschzwecken, Wartungszwecken, Reinigungszwecken, Reparaturzwecken etc.) muss der entsprechende Teil der strömungsführenden Anlage zerlegt werden, wobei nach Lösen der Flanschverbindungen das zuführende Rohrsegment und das abführende Rohrsegment auseinandergedrückt werden müssen, um den auf den dazwischen angeordneten Gittersensor wirkenden Klemmdruck zu lösen, und anschließend der Gittersensor aus der Anlage entnommen wird. Daher geht das Entfernen des Gittersensors (bzw. des Messgitters) aus der zu charakterisierenden Anlage mit einem hohen Arbeits- und Zeitaufwand einher.

Durch die Erfindung wird ein Gittersensor-System zum Einbinden eines Gittersensorelements in eine Fluidströmung bereitgestellt, mittels dessen ein unkompliziertes Einsetzen eines Gittersensors bzw. Sensorgitters in die zu charakterisierende strömungsführende Anlage und ein unkompliziertes Entfernen des Gittersensors aus der strömungsführenden Anlage ermöglicht ist, und mittels dessen eine geringe Materialbelastung des Gittersensorelements ermöglicht ist. Die Fluidströmung kann eine einphasige oder mehrphasige Fluidströmung sein.

Gemäß der Erfindung wird ein Gittersensor-System bereitgestellt, das zum Einbinden in eine fluidströmungsführende Anlage zum Charakterisieren der Fluidströmung dient. Das Gittersensor-System wird auch als Gittersensorvorrichtung bezeichnet. Das Gittersensor-System weist eine Strömungsführung mit einer Einschubaufnahme und einen Sensoreinschub auf.

Der Sensoreinschub weist ein (d.h. mindestens ein) Gittersensorelement mit einem Messgitter bzw. Elektrodengitter mit mehreren gitterartig angeordneten Elektroden auf. Der Sensoreinschub weist zudem elektrisch leitfähige Anschlussleitungen zum elektrischen Kontaktieren der Elektroden des Messgitters auf. Die Anschlussleitungen können z.B. als Anschlussdrähte ausgebildet sein. Es kann auch vorgesehen sein, dass die Anschlussleitungen integral mit den Elektroden ausgebildet sind, wobei z.B. ein erster Abschnitt eines Drahtes als Elektrode und ein zweiter Abschnitt des Drahtes als Anschlussleitung fungiert. Die Elektroden des Elektrodengitters können z.B. als elektrisch leitfähige Drähte, Stäbe oder Röhrchen ausgebildet sein.

Das Elektrodengitter kann z.B. mehrere als Sendeelektroden fungierende Elektroden und mehrere als Empfangselektroden fungierende Elektroden aufweisen, wobei die Sendeelektroden in einer ersten Ebene verlaufend angeordnet sind und die Empfangselektroden in einer zweiten Ebene verlaufend angeordnet sind, wobei die erste und die zweite Ebene parallel zueinander sind und in einem Abstand zueinander angeordnet sind. Die Sendeelektroden und die Empfangselektroden sind gitterartige derart angeordnet, dass sich ihre Projektionen kreuzen (nachfolgend als "Kreuzungspunkte" bezeichnet), wobei sich an jedem Gitterkreuzungspunkt eine der Sendeelektroden und eine der Empfangselektroden des Elektrodengitters kreuzen. Bevorzugt sind sowohl die Sendeelektroden als auch die Empfangselektroden geradlinig verlaufend bzw. stabförmig ausgebildet, wobei alle Sendeelektroden parallel zueinander in der ersten Ebene entlang einer ersten Längsrichtung verlaufen, alle Empfangselektroden parallel zueinander in der zweiten Ebene entlang einer zweiten Längsrichtung verlaufen, und wobei die erste Längsrichtung nicht parallel zu der zweiten Längsrichtung ist. Bevorzugt bilden die erste und die zweite Längsrichtung einen Winkel von 90°. Die erste bzw. zweite Ebene werden auch als erste bzw. zweite Gitterebene bezeichnet.

Das Gittersensorelement kann z.B. einen Sensorahmen aufweisen, wobei die Elektroden des Elektrodengitters an dem Sensorrahmen derart befestigt sind, dass sie gegeneinander und gegen das Erdpotenzial elektrisch isoliert sind. Der Sensorrahmen weist eine Durchgangsöffnung zum Durchtritt der Fluidströmung auf, wobei die Gitterelektroden über diese Durchgangsöffnung hinweg verlaufend an dem Sensorrahmen befestigt sind. Der Sensorrahmen besteht bevorzugt aus einem elektrisch isolierenden Material, z.B. aus einer Keramik. Demgemäß kann der Sensorrahmen z.B. aus einer oder mehreren Keramikplatten bestehen. Es kann auch vorgesehen sein, dass der Sensorrahmen von einer Leiterkarte bzw. Leiterplatte gebildet ist und das Gittersensorelement z.B. als sogenannter Leiterkartensensor ausgebildet ist.

Die Anschlussleitungen dienen zum elektrischen Kontaktieren der Elektroden des Elektrodengitters, z.B. zum Beaufschlagen der Sendeelektroden mit einem Spannungssignal und zum Abgreifen eines resultierenden Antwortsignals von den Empfangselektroden. Jede der Elektroden des Elektrodengitters ist von einer separaten Anschlussleitung kontaktiert.

Die Strömungsführung weist eine Einlass-Leitung zum Einlassen der Fluidströmung auf. Die Einlass-Leitung fungiert als Einlaufstrecke und dient zum Anbinden der Strömungsführung an eine Strömungszuführung (z.B. ein zuführendes Rohrsegment) der zu charakterisierenden strömungsführenden Anlage, zu diesem Zweck kann die Einlass-Leitung z.B. mit einem Flansch versehen sein. Die Strömungsführung weist zudem eine Auslass-Leitung zum Auslassen der Fluidströmung auf. Die Auslass-Leitung fungiert als Auslaufstrecke und dient zum Anbinden der Strömungsführung an eine Strömungsabführung (z.B. ein abführendes Rohrsegment) der strömungsführenden Anlage, zu diesem Zweck kann die Auslass-Leitung z.B. mit einem Flansch versehen sein. Die Flansche können z.B. als Standardflansche ausgebildet sein. Die Einschubaufnahme ist zwischen der Einlass-Leitung und der Auslass-Leitung angeordnet und zum (zumindest teilweisen) Aufnehmen des Sensoreinschubes ausgebildet. Sowohl die Einlass-Leitung als auch die Auslass-Leitung münden in die Einschubaufnahme. Die Strömungsführung ist derart ausgebildet, dass von ihr ein von der Einlass-Leitung durch die Einschubaufnahme hindurch zu der Auslass-Leitung verlaufender geradliniger Strömungsweg gebildet ist. D.h. die Einlass-Leitung, die Einschubaufnahme und die Auslass-Leitung definieren einen geradlinigen Strömungsweg mit einer von der Einlass-Leitung zu der Auslass-Leitung hin verlaufenden Strömungsrichtung. Die Strömungsführung dient zum Einbinden bzw. Anschließen des eigentlichen Gittersensors an die zu charakterisierende strömungsführende Anlage und wird daher auch als Anschlussvorrichtung oder als Grundkörper bezeichnet.

Die Einschubaufnahme ist eine Aufnahmeeinrichtung zum Aufnehmen des Sensoreinschubes und weist einen Aufnahme-Hohlraum zum (zumindest teilweisen) Aufnehmen des Sensoreinschubes auf. Die Einschubaufnahme weist eine Einschuböffnung auf und ist derart ausgebildet, dass der Sensoreinschub entlang einer Einschubrichtung in die Einschubaufnahme einschiebbar bzw. einführbar ist, wobei die Einschubrichtung quer zu dem von der Strömungsführung gebildeten Strömungsweg (und somit quer zu der durch diesen Strömungsweg definierten Strömungsrichtung) verläuft. Die Einschubaufnahme ist derart ausgebildet, dass von ihr eine vorgegebene Einschubrichtung definiert ist, entlang derer der Sensoreinschub in die Einschubaufnahme und somit (zumindest teilweise) in den Aufnahme-Hohlraum eingeschoben werden kann. Die Einschubaufnahme ermöglicht ein geführtes Bewegen und Einschieben des Sensoreinschubes entlang der mittels der Einschubaufnahme vorgegebenen Einschubrichtung. Die Einschubaufnahme weist eine Einschubführung auf, die zum geführten Bewegen des Sensoreinschubes entlang einer mittels der Einschubführung vorgegebenen Einschubrichtung ausgebildet ist, sodass der Sensoreinschub entlang der vorgegebenen Einschubrichtung geführt in die Einschubaufnahme einschiebbar ist. Die Einschubführung kann z.B. in Form eines mechanischen Führungselements ausgebildet sein oder durch die Geometrie der Einschubaufnahme und des Aufnahme-Hohlraums gebildet sein. Die Einschubführung ist als Geradführung ausgebildet (z.B. als Linearführung), mittels derer ein geführtes eindimensionales Bewegen und Einschieben des Sensoreinschubes in die Einschubaufnahme entlang einer Geraden ermöglicht ist. Die Einschubaufnahme kann also insbesondere derart ausgebildet sein, dass von ihr ein Bewegen des Sensoreinschubes quer bzw. senkrecht zu der Einschubrichtung verhindert ist (sodass der Sensoreinschub mittels der Einschubaufnahme seitlich geführt ist). Die Einschubaufnahme kann somit insbesondere derart ausgebildet sein, dass von ihr ein geführtes eindimensionales (geradliniges) Bewegen und Einschieben des Sensoreinschubes entlang der Einschubrichtung ermöglicht ist und eine Bewegung des Sensoreinschubes quer bzw. senkrecht zu der Einschubrichtung verhindert ist, sodass der Sensoreinschub geradlinig entlang der Einschubrichtung geführt in die Einschubaufnahme einschiebbar ist. Die Einschubaufnahme kann z.B. in Form eines zwischen die Einlass-Leitung und die Auslass-Leitung geschalteten quaderförmigen Gehäuses ausgebildet sein, in dem die Einschuböffnung und der Aufnahme-Hohlraum ausgebildet sind.

Somit wird der von der Strömungsführung definierte Strömungsweg zu den Seiten hin von der Seitenwandung der Strömungsführung umhüllt und die Einschuböffnung ist in der Seitenwandung der Strömungsführung (insbesondere in der Seitenwandung des Einschubaufnahme-Abschnitts der Strömungsführung) ausgebildet, sodass der Sensoreinschub seitlich in die als Anschlussvorrichtung fungierende Strömungsführung eingeschoben werden kann. Die Einschubrichtung kann demgemäß z.B. senkrecht bzw. rechtwinklig zu dem von der Strömungsführung definierten Strömungsweg (und somit senkrecht zu der durch diesen Strömungsweg definierten Strömungsrichtung) verlaufen, sodass die Einschubrichtung insbesondere rechtwinklig zur Axialrichtung der Einlass-Leitung und der Auslass-Leitung sein kann. Der Sensoreinschub kann seitlich in die Strömungsführung bzw. den Grundkörper eingeschoben werden und mittels einer Dichtung (je nach Anwendungsfall z.B. Graphit, Kupfer oder Pappe) fluiddicht, z.B. druck- und dampffest, abgedichtet werden.

Der Sensoreinschub kann derart ausgebildet sein, dass bei in der Einschubaufnahme aufgenommenem Sensoreinschub die Gitterebenen des Elektrodengitters senkrecht zu dem Strömungsweg bzw. der von diesem definierten Strömungsrichtung sind.

Indem das Gittersensorelement als Bestandteil des Sensoreinschubes vorgesehen ist, ist es zum Sicherstellen der Dichtheit nicht erforderlich, das Gittersensorelement mit großen Kräften zu beaufschlagen, sodass das Gittersensorelement keinen hohen Materialbelastungen ausgesetzt werden muss. Indem das Gittersensorelement als Bestandteil des Sensoreinschubes vorliegt, ist ein unkompliziertes Entfernen des Gittersensorelements aus der zu charakterisierenden strömungsführenden Anlage und ein unkompliziertes Einbringen des Gittersensorelements in die Anlage ermöglicht, wobei insbesondere die als Anschlussvorrichtung fungierende Strömungsführung des Gittersensor-Systems in der Anlage verbleiben kann. Zudem können der Sensoreinschub und somit auch die Befestigung des Gittersensors, die Abdichtung gegen Fluidaustritt und die Leitungsführung der Anschlussleitungen unabhängig von der Anschlussgestaltung (z.B. der Anschlussgeometrie), die von der zu charakterisierenden strömungsführenden Anlage vorgegeben ist, gehalten werden. Durch diese Konstruktion und die unkomplizierte Handhabung ist das Gittersensorsystem in hohem Maße für industrielle Anwendungen geeignet, z.B. zum Charakterisieren von Anlagen, in denen Fluidströmungen unter hohen Temperaturen und Drücken vorliegen.

Die Einschubaufnahme und der Sensoreinschub können derart ausgebildet sein, dass bei bestimmungsgemäß in der Einschubaufnahme aufgenommenem Sensoreinschub die Einschuböffnung mittels des Sensoreinschubes bzw. von dem Sensoreinschub verschlossen ist. Es kann z.B. vorgesehen sein, dass der Sensoreinschub einen Verschlussabschnitt zum Verschließen der Einführöffnung derart aufweist, dass bei (bestimmungsgemäß) in der Einschubaufnahme aufgenommenem Sensoreinschub die Einführöffnung von dem Verschlussabschnitt verschlossen ist. Zum Sicherstellen der Fluiddichtheit können Dichtungen und Verschlussmittel (z.B. Schrauben oder Klemmmittel) vorgesehen sein.

Gemäß einer Ausführungsform weist der Sensoreinschub ein Einschubelement auf, wobei das Einschubelement einen Aufnahmeabschnitt zum Aufnehmen des Gittersensorelements und einen Verschlussabschnitt zum Verschließen der Einschuböffnung aufweist. Beim bestimmungsgemäßen Gebrauch des Gittersensor-Systems ist das Gittersensorelement an bzw. in dem Aufnahmeabschnitt aufgenommen. Der Verschlussabschnitt ist derart ausgebildet, dass bei (bestimmungsgemäß) in der Einschubaufnahme aufgenommenem Sensoreinschub die Einschuböffnung von dem Verschlussabschnitt verschlossen ist.

Das Einschubelement kann einteilig ausgebildet sein, wobei der Aufnahmeabschnitt und der Verschlussabschnitt als einstückiges Bauteil integral miteinander ausgebildet sind. Es kann jedoch auch vorgesehen sein, dass das Einschubelement mehrteilig ausgebildet ist.

Gemäß einer Ausführungsform weist der Sensoreinschub (z.B. als Bestandteil des Einschubelements) eine Positioniereinrichtung zum variablen Einstellen der Relativpositionierung zwischen dem Aufnahmeabschnitt und dem Verschlussabschnitt auf. Demgemäß kann z.B. vorgesehen sein, dass der Aufnahmeabschnitt und der Verschlussabschnitt des Einschubelements als separate Bauteile vorliegen und mittels der Positioniereinrichtung gegeneinander bewegbar miteinander gekoppelt sind.

Indem die Positionierung des Aufnahmeabschnitts relativ zu dem Verschlussabschnitt verstellbar ist, kann die Positionierung des an dem Aufnahmeabschnitt aufgenommenen Gittersensorelements bezüglich des Strömungsweges verändert und somit anforderungsgemäß eingestellt werden (z.B. derart, dass bei in der Einschubaufnahme aufgenommenem Sensoreinschub das Elektrodengitter bezüglich des Strömungsquerschnitts zentriert angeordnet ist).

Gemäß einer Ausführungsform ist die Positioniereinrichtung zum variablen Einstellen des Abstandes zwischen dem Aufnahmeabschnitt und dem Verschlussabschnitt ausgebildet, sodass mittels der Positioniereinrichtung der Abstand zwischen dem Aufnahmeabschnitt und dem Verschlussabschnitt des Einschubelementes verstellbar ist. Die Positioniereinrichtung kann z.B. derart ausgebildet sein, dass mittels der Positioniereinrichtung der (bei in der Einschubaufnahme aufgenommenem Sensoreinschub) entlang der Einschubrichtung vorliegende Abstand zwischen dem Aufnahmeabschnitt und dem Verschlussabschnitt variabel einstellbar ist. Dadurch ist auf einfache Art und Weise ein Positionieren des Gittersensorelements ermöglicht.

Gemäß einer Ausführungsform weist das Einschubelement an dem Aufnahmeabschnitt eine Aufnahmeausnehmung mit einem Ausnehmungsboden und eine Fixierabdeckung auf, wobei das Gittersensorelement zwischen dem Ausnehmungsboden und der Fixierabdeckung in der Aufnahmeausnehmung aufgenommen ist. Demgemäß kann das Gittersensorelement von dem Einschubelement und der Fixierabdeckung beidseitig geschützt werden. Mittels der lösbar an dem übrigen Einschubelement vorgesehenen Fixierabdeckung kann das Gittersensorelement mittels Lösens und Abnehmens der Fixierabdeckung aus der Aufnahmeausnehmung herausgenommen werden und mittels Befestigens der Fixierabdeckung an dem übrigen Einschubelement in der Aufnahmeausnehmung fixiert werden.

An dem Ausnehmungsboden und in der Fixierabdeckung sind Durchgangsöffnungen zum Durchtritt der Fluidströmung vorgesehen. Es kann insbesondere vorgesehen sein, dass die in dem Ausnehmungsboden und an der Fixierabdeckung vorgesehenen Durchgangsöffnungen dieselbe Geometrie aufweisen wie die durch den Sensorrahmen des Gittersensorelements definierte Durchgangsöffnung (wobei z.B. alle diese Durchgangsöffnungen kreisförmig mit demselben Durchmesser ausgebildet sein können).

Ferner kann vorgesehen sein, dass die Einlass-Mündungsöffnung, mit der die Einlass-Leitung in die Einschubaufnahme mündet, und/oder die Auslass-Mündungsöffnung, mit der die Auslass-Leitung in die Einschubaufnahme mündet, dieselbe Geometrie aufweisen wie die durch den Sensorrahmen des Gittersensorelements definierte Durchgangsöffnung (wobei z.B. alle diese Durchgangsöffnungen kreisförmig mit demselben Durchmesser ausgebildet sein können).

Es kann vorgesehen sein, dass der Sensoreinschub eine Durchführungseinrichtung mit einer oder mehreren (fluiddichten) Durchführungen zum Hinausführen der Anschlussleitungen aus der Einschubaufnahme aufweist, wobei die Durchführungen derart angeordnet sind und die Anschlussleitungen derart durch die Durchführungen hindurchgeführt sind, dass bei in der Einschubaufnahme aufgenommenem Sensoreinschub die Anschlussleitungen mittels der Durchführungseinrichtung von einem Bereich innerhalb der Einschubaufnahme bzw. des Aufnahme-Hohlraums in einen Bereich außerhalb der Einschubaufnahme bzw. des Aufnahme-Hohlraums geführt sind. Die Durchführungen können z.B. an dem Verschlussabschnitt des Einschubelements ausgebildet sein, sodass die Anschlussleitungen mittels der Durchführungen aus dem Inneren der Einschubaufnahme durch den Verschlussabschnitt hindurch nach außen geführt werden können.

Die Durchführung der Anschlussleitungen kann z.B. über Verschraubungen erfolgen, die für hohe Temperaturen und Drücke geeignet sind (z.B. Graphitstopfbuchsen). Um Platz zu sparen, können Mehrfachdurchführungen zum Einsatz kommen. Als Dichtmaterial zum fluiddichten Abdichten der Durchführungen kommen entsprechend dem Einsatzzweck z. B. Graphit, Viton, NBR, PEEK oder PTFE in Betracht, wobei für Nassdampfanwendungen vor allem Graphit geeignet ist.

Gemäß einer Ausführungsform ist mindestens eine der Durchführungen als Mehrfachdurchführung ausgeführt, wobei mehrere der zum elektrischen Kontaktieren der Elektroden vorgesehenen Anschlussleitungen durch diese Durchführung hindurchgeführt sind. Indem eine oder mehrere derartige Mehrfachdurchführungen vorgesehen sind, kann die Anzahl der fluiddicht zu haltenden Durchführungen gering gehalten werden. Es kann vorgesehen sein, dass durch jede der Durchführungen mehrere Anschlussleitungen hindurchgeführt sind. Es kann insbesondere vorgesehen sein, dass lediglich eine einzige Durchführung vorgesehen ist und alle der Anschlussleitungen durch diese Durchführung hindurchgeführt sind.

Gemäß einer Ausführungsform weist das Gittersensorelement einen Sensorrahmen auf, wobei die Elektroden des Elektrodengitters in dem Sensorrahmen befestigt sind, die Elektroden von den Anschlussleitungen kontaktiert sind, und die Anschlussleitungen in einem Bereich zwischen dem Sensorrahmen und der Durchführungseinrichtung zugspannungsfrei verlaufend angeordnet sind. Es kann insbesondere vorgesehen sein, dass die Anschlussleitungen in dem Bereich zwischen dem Sensorrahmen und der Durchführungseinrichtung zugspannungsfrei und lose verlaufend angeordnet sind. Demgemäß kann vorgesehen sein, dass die Anschlussleitungen zwischen dem Sensorrahmen und der Durchführungseinrichtung bzw. zwischen den Elektroden und der Durchführungseinrichtung zugspannungsfrei verlaufend angeordnet sind.

Es kann z.B. vorgesehen sein, dass das Gittersensorelement einen Sensorrahmen aufweist, wobei die Elektroden des Elektrodengitters in dem Sensorrahmen befestigt sind, wobei jede der Elektroden an dem Sensorrahmen (d.h. im Bereich des Sensorrahmens) von einer der Anschlussleitungen elektrisch leitfähig kontaktiert ist, und wobei jede der Anschlussleitungen durch eine der Durchführungen hindurchgeführt und somit aus der Einschubaufnahme hinausgeführt ist. Demgemäß sind die Anschlussleitungen derart ausgebildet und angeordnet, dass sie in einem Bereich zwischen dem Sensorrahmen und den Durchführungen (durch die sie jeweils hindurchgeführt sind) nicht unter Zugspannung stehen, sondern lose verlaufen. Die Elektroden des Elektrodengitters können z.B. in dem Sensorrahmen aufgespannt sein, d.h. unter Zugspannung stehend in dem Sensorrahmen befestigt sein. Anders ausgedrückt ist also demgemäß jede der Elektroden an einer Kontaktierungsstelle von einer der Anschlussleitungen kontaktiert und jede der Anschlussleitungen durch eine der Durchführungen hindurchgeführt, wobei die Anschlussleitungen in einem Bereich zwischen der jeweiligen Kontaktierungsstelle und der zugeordneten Durchführung zugspannungsfrei verlaufend angeordnet sind.

Indem die Anschlussleitungen in dem den Durchführungen vorgelagerten Bereich zugspannungsfrei angeordnet sind, ist eine einfache Positionierung der Anschlussleitungen ermöglicht, sodass z.B. die Anschlussleitungen an beliebigen Positionen aus der Einschubaufnahme hinausgeführt werden können, sodass z.B. die Positionierung der Durchführungen nicht korrespondierend zu der Positionierung der Elektroden des Elektrodengitters ausgebildet sein muss, sodass auch die Durchführungen beliebig positioniert werden können. Dadurch ist insbesondere die Ausbildung der Durchführungen als Mehrfachdurchführungen wesentlich erleichtert.

Der Sensoreinschub ist derart ausgebildet, dass bei (bestimmungsgemäß) in der Einschubaufnahme aufgenommenem Sensoreinschub keine der Elektroden des Elektrodengitters parallel zu der Einschubrichtung verläuft.

Der von den Anschlussleitungen zu überbrückende Abstand erstreckt sich entlang der Einschubrichtung. Indem die Elektroden mit Ihrer Längsrichtung nicht parallel zu der Einschubrichtung verlaufend angeordnet sind, kann ein zugspannungsfreies Anordnen der Anschlussleitungen begünstigt werden.

Es kann insbesondere vorgesehen sein, dass das Elektrodengitter mehrere als Sendeelektroden fungierende Elektroden und mehrere als Empfangselektroden fungierende Elektroden aufweist, wobei alle Sendeelektroden parallel zueinander in einer ersten Gitterebene entlang einer ersten Längsrichtung verlaufend angeordnet sind und alle Empfangselektroden parallel zueinander in einer zweiten Gitterebene entlang einer zweiten Längsrichtung verlaufend angeordnet sind, wobei die erste und die zweite Ebene parallel zueinander sind und die erste und die zweite Längsrichtung einen Winkel von 90° miteinander bilden. Gemäß dieser Konfiguration kann der Sensoreinschub z.B. derart ausgebildet sein, dass bei in der Einschubaufnahme aufgenommenem Sensoreinschub die beiden Gitterebenen senkrecht zu dem Strömungsweg bzw. der Strömungsrichtung angeordnet sind und sowohl die erste als auch die zweite Längsrichtung einen Winkel von 45° mit der Einschubrichtung bildet. Diese symmetrische Ausgestaltung ermöglicht ein besonders unkompliziertes und raumoptimiertes Anordnen der Anschlussleitungen.

Es kann vorgesehen sein, dass die Einlass-Leitung und die Auslass-Leitung über ihre gesamte Länge hinweg denselben Innenquerschnitt aufweisen.

Gemäß einer Ausführungsform weist die Einlass-Leitung und/oder die Auslass-Leitung einen entlang des von der Strömungsführung gebildeten Strömungsweges variierenden Innenquerschnitt (z.B. einen variierenden Innendurchmesser) auf. Demgemäß kann vorgesehen sein, dass der freie Innenquerschnitt der Einlass-Leitung und/oder der Auslass-Leitung über deren Länge hinweg nicht konstant ist. Dadurch kann das Gittersensor-System strömungstechnisch an die zu charakterisierende strömungsführende Anlage angepasst werden.

Es kann z.B. vorgesehen sein, dass die Einlass-Leitung und/oder die Auslass-Leitung einen sich in Richtung zu der Einschubaufnahme hin konisch verjüngenden Innenquerschnitt aufweist oder zumindest einen Abschnitt mit einem sich in Richtung zu der Einschubaufnahme hin konisch verjüngenden Innenquerschnitt aufweist. Durch eine derartige stufenlose Innenquerschnittsvariation kann die Beeinflussung der zu charakterisierenden Fluidströmung bei der strömungstechnischen Anpassung an die zu charakterisierende Anlage gering gehalten werden.

Die Einschubaufnahme weist einen Aufnahme-Hohlraum zum (zumindest teilweisen) Aufnehmen des Sensoreinschubes auf. Es kann z.B. vorgesehen sein, dass der Sensoreinschub ein Einschubelement mit einem Aufnahmeabschnitt und einem Verschlussabschnitt aufweist, und dass die Einschubaufnahme und das Einschubelement derart ausgebildet sind, dass bei bestimmungsgemäß in der Einschubaufnahme aufgenommenem Sensoreinschub der Aufnahmeabschnitt des Einschubelements in dem Aufnahme-Hohlraum aufgenommen ist und der Verschlussabschnitt an den Aufnahme-Hohlraum angrenzend und die Einschuböffnung verschließend angeordnet ist.

Gemäß einer Ausführungsform weist der Aufnahme-Hohlraum in einem Schnitt in einer senkrecht zur Einschubrichtung verlaufenden Schnittebene einen rechteckigen Querschnitt (bzw. eine rechteckige Kontur) mit abgerundeten Ecken auf. Dadurch kann z.B. ein gegebenenfalls zwischen dem Sensoreinschub und der Einschubaufnahme verbleibender Raum oder Spalt besser von der Fluidströmung geflutet werden, ohne dass unerwünschte Fremdmaterial-Volumina (z.B. Gasvolumina) in der Einschubaufnahme verbleiben.

Gemäß einer weiteren Ausführungsform weist die Einschubaufnahme gegenüber der Einschuböffnung eine weitere (verschließbare) Öffnung auf, die z.B. als weitere Einschuböffnung fungieren kann. Demgemäß kann die Einschubaufnahme bzw. der Aufnahme-Hohlraum als beidseitig offene Durchgangsöffnung ausgebildet sein.

Gemäß dieser Ausführung kann der Sensoreinschub je nach Anforderung von jeder der beiden Seiten her in die Einschubaufnahme eingeschoben werden. Es kann auch vorgesehen sein, dass das Gittersensor-System zwei Sensoreinschübe aufweist, wobei die erste Einschuböffnung mit einem ersten Sensoreinschub bestückt wird und die weitere zweite Einschuböffnung mit einem zweiten Sensoreinschub bestückt wird. Zudem ermöglicht diese Ausführungsform ein effektiveres Reinigen der Einschubaufnahme.

Es kann vorgesehen sein, dass die Strömungsführung bzw. der Grundkörper aus Metall besteht. Es kann jedoch (z.B. für Anwendungen im Niedertemperatur- und/oder Niederdruckbereich) auch vorgesehen sein, dass die Strömungsführung aus Kunststoff besteht, z.B. aus PVC.

Des Weiteren kann vorgesehen sein, dass das Einschubelement aus Metall oder Kunststoff besteht. Gemäß einer Ausführung bestehen sowohl die Strömungsführung als auch das Einschubelement aus Metall. Gemäß einer anderen Ausführung bestehen sowohl die Strömungsführung als auch das Einschubelement aus Kunststoff.

Gemäß einer Ausführungsform ist die Strömungsführung als einstückiges Bauteil ausgeführt. Demgemäß können die Einlass-Leitung, die Auslass-Leitung und die Einschubaufnahme als einstückiges Bauteil integral miteinander ausgebildet sein (d.h. liegen in einem einzigen Bauteil integriert vor).

Es kann insbesondere vorgesehen sein, dass die Strömungsführung einstückig als monolithisches Bauteil vorliegt (d.h. als ein einstückiges Bauteil ohne räumliche Materialvariationen, z.B. ohne zusätzliche Füge- bzw. Verbindungsmaterialien wie etwa Klebmaterialien, Schweißmaterialien oder Lötmaterialien). Die Strömungsführung kann z.B. ein Gussteil sein oder aus einem Gussteil gefertigt sein, wobei das Gussteil z.B. aus Metall oder aus Kunststoff sein kann.

Indem die Strömungsführung als monolithisches Bauteil, insbesondere als Gusstteil, ausgebildet ist, kann eine Störung der zu charakterisierenden Fluidströmung durch Fügeartefakte (wie z.B. Schweißnähte) verhindert werden.

Gemäß den vorstehenden Erläuterungen kann der Sensoreinschub insbesondere die folgenden Funktionen übernehmen. Der Sensoreinschub dient zum ersten der Aufnahme des Elektrodengitters bzw. Sensorgitters, zum zweiten dem druckfesten Herausführen der Anschlussleitungen und schließlich zum Abdichten der Sensor-Sektion gegenüber der Umgebung. Der erfindungsgemäße Aufbau bietet viele Vorteile. So kann z.B. der Einbau der Strömungsführung bzw. des Grundkörpers in die zu überwachende Anlage unabhängig vom Sensoreinschub erfolgen und die Strömungsführung kann dauerhaft in der Anlage verbleiben, sodass z.B. zum Entfernen des eigentlichen Messaufnehmers in Form des Elektrodengitters (z.B. zu Wartungszwecken) die Anlage nicht demontiert werden muss, wodurch z.B. ein Austausch bei Verschleiß oder zu Reinigungszwecken einfach und ohne Demontage der Anlage möglich ist. Es können unterschiedliche Gittersensorelemente eingeschoben werden, beispielsweise mit dicken oder dünnen Drähten, oder unterschiedlichen Drahtabständen und damit Auflösungen, auch Doppelsensoren. Anstelle des Sensoreinschubes können auch Dummy-Einschübe ohne Gittersensorelement oder einfache Blinddeckel zum Verschließen der Einschuböffnung eingesetzt werden.

Die Erfindung wird nachfolgend anhand eines Ausführungsbeispiels mit Bezugnahme auf die beiliegenden Figuren erläutert, wobei gleiche oder ähnliche Merkmale mit gleichen Bezugszeichen versehen sind, hierbei zeigen schematisch:
- Figur 1: eine Seitenansicht einer Strömungsführung,
- Figur 2: eine Schnittdarstellung der Strömungsführung,
- Figur 3: eine Draufsicht eines Sensoreinschubes,
- Figur 4: eine Frontalansicht des Sensoreinschubes, und
- Figur 5: eine Seitenansicht des Sensoreinschubes.

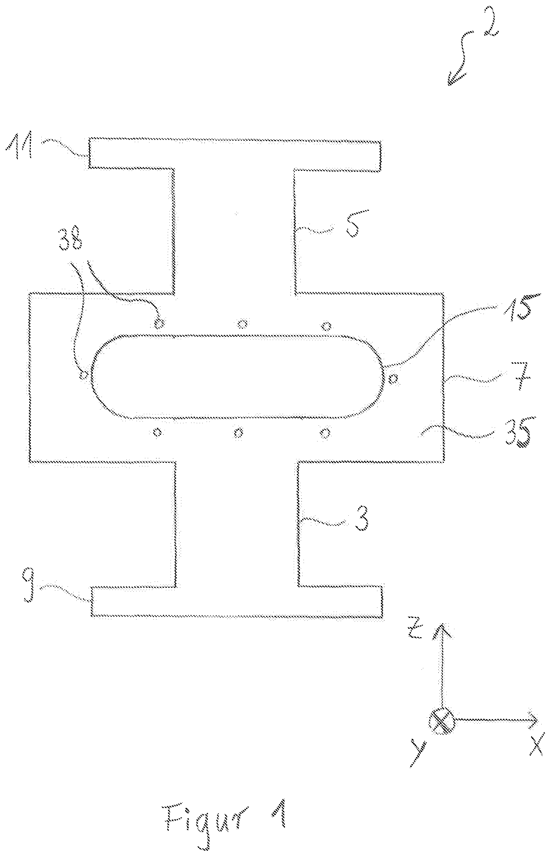

Die Figuren 1 bis 5 veranschaulichen ein Gittersensor-System gemäß einer Ausführungsform, wobei das Gittersensor-System einen Sensoreinschub 1 und eine Strömungsführung 2 aufweist.

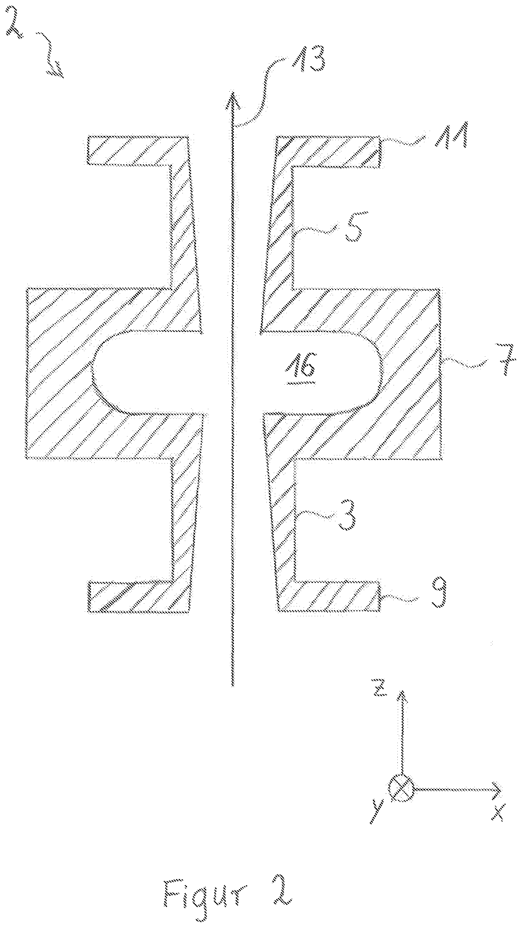

Figur 1 zeigt die Strömungsführung 2 in einer Seitenansicht, Figur 2 zeigt die Strömungsführung 2 in einer Schnittdarstellung. Die Strömungsführung 2 weist eine Einlass-Leitung 3, eine Auslass-Leitung 5, und eine zwischen der Einlass-Leitung 3 und der Auslass-Leitung 5 angeordnete Einschubaufnahme 7 auf. Die Einlass-Leitung 3 und die Auslass-Leitung 5 sind als Beispiel Rohrsegmente mit einem kreisförmigen Innenquerschnitt. Die Strömungsführung 1 ist als einstückiges, monolithisches Bauteil ausgeführt und ist als Beispiel ein Gussteil (z.B.ein Metall-Gussteil oder ein Kunststoff-Gussteil), d.h. wurde mittels Gießens gefertigt.

Die Einlass-Leitung 3 ist mittels eines Flansches 9 zum Anbinden an eine strömungszuführende Rohrleitung einer strömungsführenden Anlage, in der eine zu charakterisierende Fluidströmung geführt ist, ausgebildet (nicht dargestellt). Die Auslass-Leitung 5 ist mittels eines Flansches 11 zum Anbinden an eine strömungsabführende Rohrleitung der strömungsführenden Anlage ausgebildet (nicht dargestellt). Die Einlass-Leitung 3 und die Auslass-Leitung 5 weisen dieselbe Achse auf, sodass von der Strömungsführung 2 ein durch die Einlass-Leitung 3, die Einschubaufnahme 7 und die Auslass-Leitung 5 hindurch verlaufender, geradliniger Strömungsweg 13 gebildet ist mit einer von der Einlass-Leitung 3 zu der Auslass-Leitung 5 hin verlaufenden Strömungsrichtung 13, wobei die Strömungsrichtung 13 in z-Richtung des in den Figuren dargestellten xyz-Koordinatensystems verläuft. Sowohl die Einlass-Leitung 3 als auch die Auslass-Leitung 5 weist einen entlang des Strömungsweges 13 variierenden Innenquerschnitt auf, wobei vorliegend als Beispiel sowohl die Einlass-Leitung 3 als auch die Auslass-Leitung 5 einen sich in Richtung zu der Einschubaufnahme 7 hin konisch verjüngenden Innenquerschnitt aufweist.

Die Einschubaufnahme 7 weist eine Einschuböffnung 15 auf. Der Sensoreinschub 1 ist durch die Einschuböffnung 15 entlang einer Einschubrichtung in die Einschubaufnahme 7 einschiebbar, wobei die Einschubrichtung in y-Richtung des in den Figuren dargestellten xyz-Koordinatensystems verläuft. Die Einschubrichtung (y-Richtung) verläuft somit quer zu dem Strömungsweg 13 und der Strömungsrichtung (z-Richtung), wobei die Einschubrichtung einen Winkel von 90° mit der Strömungsrichtung 13 bildet.

Die Einschubaufnahme 7 weist einen Aufnahme-Hohlraum 16 auf, wobei der Aufnahme-Hohlraum 16 in einer parallel zu der xz-Ebene und somit senkrecht zur Einschubrichtung verlaufenden Schnittebene einen rechteckigen Querschnitt mit abgerundeten Ecken (bzw. eine rechteckige Kontur mit abgerundeten Ecken) aufweist.

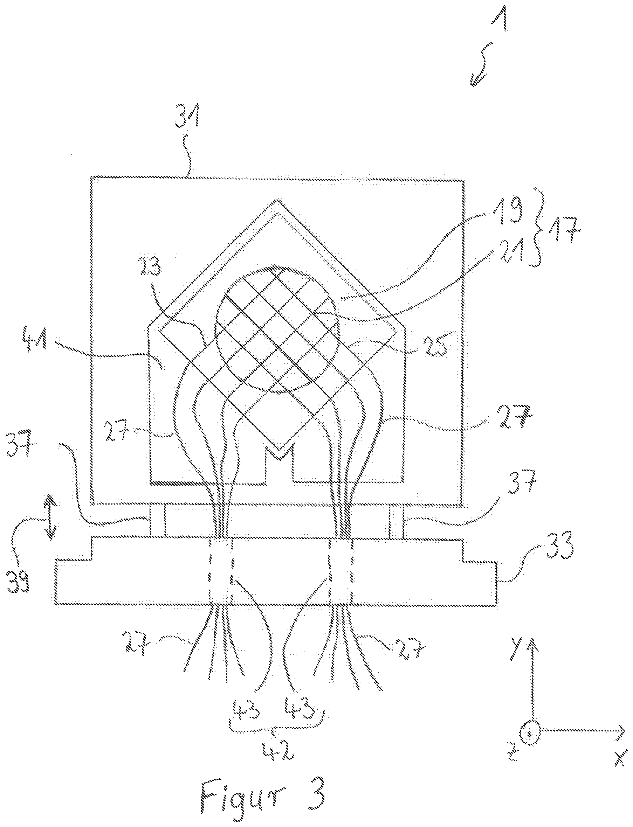

Figur 3 zeigt den Sensoreinschub 1 in einer schematischen Draufsicht in vergrößerter Darstellung. Der Sensoreinschub 1 weist ein Gittersensorelement 17 mit einem Sensorrahmen 19 und einem Elektrodengitter 21 auf. Der Sensorrahmen 19 besteht aus einem elektrisch isolierenden Material, als Beispiel aus einer Keramik. Das Elektrodengitter 21 weist als Beispiel mehrere Sendeelektroden 23, die in einer ersten Ebene entlang einer ersten Längsrichtung parallel zueinander verlaufend angeordnet sind, und mehrere Empfangselektroden 25, die in einer zweiten Ebene entlang einer zweiten Längsrichtung parallel zueinander verlaufend angeordnet sind, auf. Die erste und die zweite Ebene sind parallel zueinander, die erste Längsrichtung bildet mit der zweiten Längsrichtung einen Winkel von 90°. Das Gittersensorelement 17 ist derart an dem Sensoreinschub gelagert, dass bei bestimmungsgemäß in der Einschubaufnahme 7 aufgenommenem Sensoreinschub 1 die erste und die zweite Ebene senkrecht zu der Strömungsrichtung 13 (z-Richtung) sind. Die Elektroden des Elektrodengitters 21 sind über die von dem Sensorrahmen 19 definierte kreisförmige Öffnung gespannt. Die Einschubaufnahme 7 und der Sensoreinschub1 sind derart ausgebildet, dass bei bestimmungsgemäß in der Einschubaufnahme 7 aufgenommenem Sensoreinschub 1 das Elektrodengitter 21 in dem Strömungsweg 13 angeordnet ist.

Der Sensoreinschub 1 weist zudem mehrere Anschlussleitungen 27 zum elektrischen Kontaktieren der Elektroden 23, 25 des Elektrodengitters 21 auf.

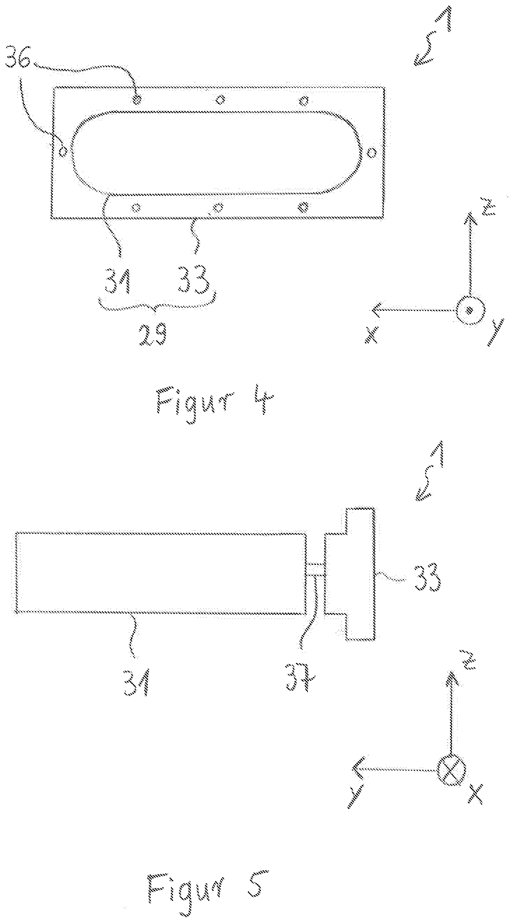

Der Sensoreinschub 1 weist ein Einschubelement 29 auf. In den Figuren 4 und 5 ist die Ausgestaltung des Einschubelements 29 verdeutlicht. Das Einschubelement 29 weist einen Aufnahmeabschnitt 31 zum Aufnehmen des Gittersensorelements 17 und einen Verschlussabschnitt 33 zum Verschließen der Einschuböffnung 15 auf. Beim bestimmungsgemäßen Gebrauch des Gittersensor-Systems ist das Gittersensorelement 17 an dem Aufnahmeabschnitt 31 aufgenommen.

Der Sensoreinschub 1 und die Einschubaufnahme 7 sind derart ausgebildet, dass beim bestimmungsgemäßen Betrieb des Gittersensor-Systems mit in die Einschubaufnahme 7 eingeschobenem Sensoreinschub 1 der Aufnahmeabschnitt 31 des Einschubelements 29 in dem Aufnahme-Hohlraum 16 aufgenommen ist und die Einschuböffnung 15 mittels des Verschlussabschnitts 33 des Einschubelements 29 verschlossen ist (wobei zwischen dem die Einschuböffnung 15 definierenden Gehäuse 35 und dem Verschlussabschnitt 31 in bekannter Weise Dichtungen vorgesehen sein können). Es kann z.B. vorgesehen sein, dass der Verschlussabschnitt 33 mittels Schrauben oder anderer lösbarer Verbindungen an die Einschubaufnahme 7 bzw. an das die Einschuböffnung 15 definierende Gehäuse 35 angepresst wird und somit die Einschuböffnung 15 fluiddicht verschließt. So können z.B. in dem Verschlussabschnitt 33 mehrere Durchgangsbohrungen 36 zum Hindurchführen von Schrauben und an der Einschubaufnahme 7 korrespondierende Innengewinde 38 zum Halten der Schrauben vorgesehen sein. Somit sind die Einschubaufnahme 7 und der Sensoreinschub 1 insbesondere derart ausgebildet, dass bei bestimmungsgemäß in der Einschubaufnahme 7 aufgenommenem Sensoreinschub 1 die Einschuböffnung 15 mittels des Sensoreinschubes 1 fluiddicht verschlossen ist.

Der Sensoreinschub 1 weist ferner als Bestandteil des Einschubelements 29 eine Positioniereinrichtung 37 auf, die zum variablen Einstellen der Positionierung des Aufnahmeabschnitts 31 relativ zu dem Verschlussabschnitt 33 ausgebildet ist. Die Positioniereinrichtung 37 ist zum variablen Einstellen des zwischen dem Aufnahmeabschnitt und dem Verschlussabschnitt vorliegenden Abstandes ausgebildet. Mittels der Positioniereinrichtung 37 ist der (bei bestimmungsgemäß in der Einschubaufnahme aufgenommenem Sensoreinschub) entlang der Einschubrichtung (y-Richtung) zwischen dem Aufnahmeabschnitt 31 und dem Verschlussabschnitt 33 vorliegende Abstand verstellbar und somit auf einen gewünschten Wert einstellbar. Vorliegend ist die Positioniereinrichtung 37 durch zwei zwischen den Aufnahmeabschnitt 31 und den Verschlussabschnitt 33 geschaltete Positionierschrauben 37 gegeben, mittels derer der Abstand entlang der y-Richtung zwischen dem Aufnahmeabschnitt 31 und dem Verschlussabschnitt 33 verstellbar ist (in Figur 3 veranschaulicht durch den Doppelpfeil 39).

Der Aufnahmeabschnitt 31 des Einschubelements 29 weist eine Aufnahme zum Aufnehmen des Gittersensorelements 17 auf. Als Beispiel weist der Aufnahmeabschnitt 31 ein Aufnahmeausnehmung 41 auf, wobei das Gittersensorelement 17 in der Aufnahmeausnehmung 41 aufgenommen ist und mittels einer Fixierabdeckung (nicht dargestellt) in der Aufnahmeausnehmung 41 gehalten ist, sodass das Gittersensorelement 17 zwischen dem Boden der Aufnahmeausnehmung 41 und der Fixierabdeckung angeordnet und gehalten ist. In dem Ausnehmungsboden der Aufnahmeausnehmung und in der Fixierabdeckung sind Passieröffnungen zum Passieren der zu charakterisierenden Fluidströmung ausgebildet (nicht dargestellt).

Der Sensoreinschub 1 weist eine Durchführungseinrichtung 42 mit mehreren (als Beispiel: zwei) fluiddichten Durchführungen 43 zum Hindurchführen der Anschlussleitungen 27 auf. Jede der Elektroden 23, 25 des Messgitters 21 ist von einer der Anschlussleitungen 27 kontaktiert. Jede der Anschlussleitungen 27 ist durch eine der Durchführungen 43 hindurchgeführt und somit aus dem Aufnahme-Hohlraum 16 hinausgeführt. Diejenigen Anschlussleitungen 27, von denen die Sendeelektroden 23 kontaktiert sind, sind durch eine der beiden Durchführungen 43 hindurch verlaufend angeordnet. Diejenigen Anschlussleitungen 27, von denen die Empfangselektroden 25 kontaktiert sind, sind durch die andere der beiden Durchführungen 43 hindurch verlaufend angeordnet, sodass durch beide der Durchführungen 43 mehrere der Anschlussleitungen 27 hindurchgeführt sind. Somit ist jede der beiden Durchführungen 43 als Mehrfachdurchführung ausgebildet. Die beiden Durchführungen 43 sind in dem Verschlussabschnitt 33 des Einschubelements 29 ausgebildet. In Figur 3 sind die Durchführungen 43 schematisch mittels durchbrochener Linien gekennzeichnet.

Die Anschlussleitungen 27 sind in dem Bereich zwischen dem Sensorrahmen 19 und der Durchführungseinrichtung 42 bzw. den ihnen zugeordneten Durchführungen 43 zugspannungsfrei verlaufend angeordnet. Die Anschlussleitungen 27 verlaufen also zwischen der Kontaktierungsstelle, an der sie die ihnen zugeordnete Gitterelektrode kontaktieren, und der Durchführung 43, durch die sie hindurchgeführt sind, zugspannungsfrei.

Der Sensoreinschub 1 ist derart ausgebildet, dass (bei bestimmungsgemäß in der Einschubaufnahme 7 aufgenommenem Sensoreinschub 1) keine der Elektroden 23, 25 des Elektrodengitters 21 (also weder die Sendeelektroden 23 noch die Empfangselektroden 25) parallel zu der Einschubrichtung (y-Richtung) verläuft. Das Gittersensorelement 17 ist derart an dem Sensoreinschub 1 aufgenommen, dass (bei bestimmungsgemäß in der Einschubaufnahme 7 aufgenommenem Sensoreinschub 1) sowohl die Sendeelektroden 23 als auch die Empfangselektroden 25 senkrecht zur Strömungsrichtung 13 in der xy-Ebene verlaufen, wobei sowohl die Sendeelektroden 23 als auch die Empfangselektroden 25 einen Winkel von 45° mit der Einschubrichtung (y-Richtung) bilden.

Die Einschubaufnahme 7 weist gegenüber der Einschuböffnung 15 eine weitere (verschließbare) Öffnung auf (nicht dargestellt), die als weitere Einschuböffnung fungieren kann. Demgemäß ist die Einschubaufnahme bzw. der Aufnahme-Hohlraum als beidseitig offene Durchgangsöffnung ausgebildet.

### Liste der verwendeten Bezugszeichen

- 1: Sensoreinschub
- 2: Strömungsführung
- 3: Einlass-Leitung
- 5: Auslass-Leitung
- 7: Einschubaufnahme
- 9: Flansch der Einlass-Leitung
- 11: Flansch der Auslass-Leitung
- 13: Strömungsweg / Strömungsrichtung
- 15: Einschuböffnung
- 16: Aufnahme-Hohlraum
- 17: Gittersensorelement
- 19: Sensorrahmen
- 21: Elektrodengitter / Messgitter
- 23: Sendeelektroden
- 25: Empfangselektroden
- 27: Anschlussleitungen
- 29: Einschubelement des Sensoreinschubes
- 31: Aufnahmeabschnitt des Einschubelements
- 33: Verschlussabschnitt des Einschubelements
- 35: Gehäuse der Einschubaufnahme
- 36: Durchgangsbohrung
- 37: Positioniereinrichtung
- 38: Innengewinde
- 39: variabler Abstand zwischen Aufnahmeabschnitt und Verschlussabschnitt
- 41: Aufnahmeausnehmung
- 42: Durchführungseinrichtung
- 43: Durchführung / Mehrfachdurchführung

## Patentansprüche

1. Gittersensor-System zum Einbinden in eine eine Fluidströmung führende Anlage zum Charakterisieren der Fluidströmung, aufweisend:
- eine Sensorkomponente (1), die ein Gittersensorelement (17) mit mehreren gitterartig unter Ausbildung von Kreuzungspunkten angeordneten Elektroden (23, 25) und Anschlussleitungen (27) zum elektrischen Kontaktieren der Elektroden aufweist, und
- eine Strömungsführung (2) mit einer Einlass-Leitung (3) zum Einlassen der Fluidströmung, einer Auslass-Leitung (5) zum Auslassen der Fluidströmung, und einer zwischen der Einlass-Leitung (3) und der Auslass-Leitung (5) angeordneten Aufnahme (7) zum Aufnehmen der Sensorkomponente (1), wobei
- die Strömungsführung (2) derart ausgebildet ist, dass von ihr ein von der Einlass-Leitung (3) durch die Aufnahme (7) hindurch zu der Auslass-Leitung (5) verlaufender geradliniger Strömungsweg (13) gebildet ist, **dadurch gekennzeichnet, dass**
- die Sensorkomponente (1) als Sensoreinschub und die Aufnahme (7) als Einschubaufnahme ausgebildet ist, wobei die Einschubaufnahme (7) eine Einschuböffnung (15) und eine als Geradführung ausgebildete Einschubführung aufweist und derart ausgebildet ist, dass von ihr eine quer zu dem Strömungsweg verlaufende, mittels der Geradführung vorgegebene Einschubrichtung definiert ist und der Sensoreinschub (1) durch die Einschuböffnung (15) entlang der vorgegebenen Einschubrichtung (y) in die Einschubaufnahme (7) einschiebbar ist, und
- der Sensoreinschub (1) derart ausgebildet ist, dass bei in der Einschubaufnahme (7) aufgenommenem Sensoreinschub (1) keine der Elektroden (23, 25) parallel zu der Einschubrichtung (y) verläuft.

2. Gittersensor-System nach Anspruch 1, wobei die Einschubaufnahme (7) und der Sensoreinschub (1) derart ausgebildet sind, dass bei in der Einschubaufnahme (7) aufgenommenem Sensoreinschub (1) die Einschuböffnung (15) mittels des Sensoreinschubes (1) verschlossen ist.

3. Gittersensor-System nach Anspruch 1 oder 2, wobei der Sensoreinschub (1) ein Einschubelement (29) mit einem Aufnahmeabschnitt (31) zum Aufnehmen des Gittersensorelements (17) und einem Verschlussabschnitt (33) zum Verschließen der Einschuböffnung (15) aufweist.

4. Gittersensor-System nach Anspruch 3, wobei der Sensoreinschub (1) eine Positioniereinrichtung (37) zum variablen Einstellen der Relativpositionierung zwischen dem Aufnahmeabschnitt (31) und dem Verschlussabschnitt (33) aufweist.

5. Gittersensor-System nach Anspruch 4, wobei die Positioniereinrichtung (37) zum variablen Einstellen des Abstandes zwischen dem Aufnahmeabschnitt (31) und dem Verschlussabschnitt (33) ausgebildet ist.

6. Gittersensor-System nach einem der Ansprüche 3 bis 5, wobei das Einschubelement (29) eine Aufnahmeausnehmung (41) mit einem Ausnehmungsboden und eine Fixierabdeckung aufweist, und wobei das Gittersensorelement (17) zwischen dem Ausnehmungsboden und der Fixierabdeckung in der Aufnahmeausnehmung (41) aufgenommen ist.

7. Gittersensor-System nach einem der Ansprüche 1 bis 6, wobei der Sensoreinschub (1) eine Durchführungseinrichtung (42) mit einer oder mehreren Durchführungen (43) zum Hindurchführen der Anschlussleitungen (27) aufweist, sodass bei in der Einschubaufnahme (7) aufgenommenem Sensoreinschub (1) die Anschlussleitungen (27) mittels der Durchführungseinrichtung (42) aus der Einschubaufnahme (7) herausgeführt sind.

8. Gittersensor-System nach Anspruch 7, wobei durch mindestens eine der Durchführungen (43) mehrere der Anschlussleitungen (27) hindurchgeführt sind.

9. Gittersensor-System nach Anspruch 7 oder 8, wobei das Gittersensorelement (17) einen Sensorrahmen (19) aufweist, die Elektroden (23, 25) in dem Sensorrahmen (19) befestigt sind, die Elektroden (23, 25) von den Anschlussleitungen (27) kontaktiert sind, und die Anschlussleitungen (27) in einem Bereich zwischen dem Sensorrahmen (19) und der Durchführungseinrichtung (42) zugspannungsfrei verlaufend angeordnet sind.

10. Gittersensor-System nach einem der Ansprüche 1 bis 9, wobei die Einlass-Leitung (3) und/oder die Auslass-Leitung (5) einen entlang des Strömungsweges (13) variierenden Innenquerschnitt aufweist.

11. Gittersensor-System nach einem der Ansprüche 1 bis 10, wobei die Einlass-Leitung (3) und/oder die Auslass-Leitung (5) zumindest einen Abschnitt mit einem sich in Richtung zu der Einschubaufnahme (7) hin konisch verjüngenden Innenquerschnitt aufweist.

12. Gittersensor-System nach einem der Ansprüche 1 bis 11, wobei die Einschubaufnahme (7) einen Aufnahme-Hohlraum (16) aufweist, wobei der Aufnahme-Hohlraum (16) in einem Schnitt in einer senkrecht zur Einschubrichtung (y) verlaufenden Schnittebene einen rechteckigen Querschnitt mit abgerundeten Ecken aufweist.

13. Gittersensor-System nach einem der Ansprüche 1 bis 12, wobei die Einschubaufnahme (7) gegenüber der Einschuböffnung (15) eine verschließbare weitere Öffnung aufweist.

14. Gittersensor-System nach einem der Ansprüche 1 bis 13, wobei die Strömungsführung (2) als einstückiges Bauteil ausgeführt ist.

## Claims

1. Grid sensor system for incorporation into a fluid flow-conducting system for characterizing the fluid flow, comprising:
- a sensor component (1) which has a grid sensor element (17) with a plurality of electrodes (23, 25) which are arranged in a grid-like manner with the formation of crossover points and connector lines (27) for electrical contacting of the electrodes, and
- a flow guide (2) with an inlet line (3) for the inlet of the fluid flow, an outlet line (5) for the outlet of the fluid flow, and a receptacle (7), arranged between the inlet line (3) and the outlet line (5), for receiving the sensor component (1),
- the flow guide (2) being configured in such a way that a rectilinear flow path (13) which runs from the inlet line (3) through the receptacle (7) to the outlet line (5) is formed by it, **characterized in that**
- the sensor component (1) is configured as a sensor slide-in unit and the receptacle (7) is configured as a slide-in receptacle, the slide-in receptacle (7) having a slide-in opening (15) and a slide-in guide which is configured as a linear guide, and being configured in such a way that a slide-in direction which is defined by means of the linear guide and runs transversely with respect to the flow path is defined by it, and the sensor slide-in unit (1) can be slid into the slide-in receptacle (7) through the slide-in opening (15) along the defined slide-in direction (y), and
- the sensor slide-in unit (1) is configured in such a way that none of the electrodes (23, 25) runs parallel to the slide-in direction (y) when the sensor slide-in unit (1) is received in the slide-in receptacle (7).

2. Grid sensor system according to Claim 1, the slide-in receptacle (7) and the sensor slide-in unit (1) being configured in such a way that the slide-in opening (15) is closed by means of the sensor slide-in unit (1) when the sensor slide-in unit (1) is received in the slide-in receptacle (7).

3. Grid sensor system according to Claim 1 or 2, the sensor slide-in unit (1) having a slide-in element (29) with a receiving section (31) for receiving the grid sensor element (17) and a closure section (33) for closing the slide-in opening (15).

4. Grid sensor system according to Claim 3, the sensor slide-in unit (1) having a positioning device (37) for variable setting of the relative positioning between the receiving section (31) and the closure section (33).

5. Grid sensor system according to Claim 4, the positioning device (37) being configured for variable setting of the spacing between the receiving section (31) and the closure section (33).

6. Grid sensor system according to one of Claims 3 to 5, the slide-in element (29) having a receiving recess (41) with a recess bottom and a fixing covering, and the grid sensor element (17) being received in the receiving recess (41) between the recess bottom and the fixing covering.

7. Grid sensor system according to one of Claims 1 to 6, the sensor slide-in unit (1) having a leadthrough device (42) with one or more leadthroughs (43) for leading through the connector lines (27), such that the connector lines (27) are routed out of the slide-in receptacle (7) by means of the leadthrough device (42) when the sensor slide-in unit (1) is received in the slide-in receptacle (7).

8. Grid sensor system according to Claim 7, a plurality of the connector lines (27) being guided through at least one of the leadthroughs (43).

9. Grid sensor system according to Claim 7 or 8, the grid sensor element (17) having a sensor frame (19), the electrodes (23, 25) being fastened in the sensor frame (19), the electrodes (23, 25) being contacted by the connector lines (27), and the connector lines (27) being arranged so as to run without tensile stress in a region between the sensor frame (19) and the leadthrough device (42) .

10. Grid sensor system according to one of Claims 1 to 9, the inlet line (3) and/or the outlet line (5) having an internal cross section which varies along the flow path (13).

11. Grid sensor system according to one of Claims 1 to 10, the inlet line (3) and/or the outlet line (5) having at least one section with an internal cross section which tapers conically in the direction of the slide-in receptacle (7).

12. Grid sensor system according to one of Claims 1 to 11, the slide-in receptacle (7) having a receiving cavity (16), the receiving cavity (16) having a rectangular cross section with rounded corners in a section in a sectional plane which runs perpendicularly with respect to the slide-in direction (y).

13. Grid sensor system according to one of Claims 1 to 12, the slide-in receptacle (7) having a closable further opening opposite the slide-in opening (15).

14. Grid sensor system according to one of Claims 1 to 13, the flow guide (2) being configured as a single-piece component.

## Revendications

1. Système de détection en treillis destiné à être incorporé dans une installation de guidage d'écoulement de fluide afin de caractériser l'écoulement de fluide, ledit système comportant :
- un composant de détection (1) qui comporte un élément de détection en treillis (17) pourvu d'une pluralité d'électrodes (23, 25), disposées en treillis en formant des points de croisement, et de lignes de connexion (27) destinées à venir en contact électrique avec les électrodes, et
- un guide d'écoulement (2) pourvu d'une conduite d'entrée (3) destinée à l'entrée de l'écoulement de fluide, une conduite de sortie (5) destinée à la sortie de l'écoulement de fluide, et un logement (7) disposé entre la conduite d'entrée (3) et la conduite de sortie (5) et destiné à recevoir le composant de détection (1),
- le guide d'écoulement (2) étant conçu de manière à former une voie d'écoulement rectiligne (13) qui s'étend de la conduite d'entrée (3) à travers le logement (7) jusqu'à la conduite de sortie (5), **caractérisé en ce que**
- le composant de détection (1) est conçu comme un insert de détection et le logement (7) est conçu comme un logement d'insert, le logement d'insert (7) comportant une ouverture d'insert (15) et un guide d'insert conçu comme un guide rectiligne et étant conçu de manière à définir une direction d'insertion s'étendant transversalement au chemin d'écoulement et spécifiée au moyen du guide rectiligne et l'insert de détection (1) pouvant être inséré dans le logement d'insert (7) à travers l'ouverture d'insert (15) dans la direction d'insertion spécifiée (y), et
- l'insert de détection (1) est conçu de manière à ce que, lorsque l'insert de détection (1) est reçu dans le logement d'insert (7), aucune des électrodes (23, 25) ne s'étend parallèlement à la direction d'insertion (y).

2. Système de détection en treillis selon la revendication 1, le logement d'insert (7) et l'insert de détection (1) étant conçus de manière à ce que, lorsque l'insert de détection (1) est logé dans le logement d'insert (7), l'ouverture d'insert (15) soit fermée au moyen de l'insert de détection (1).

3. Système de détection en treillis selon la revendication 1 ou 2, l'insert de détection (1) comportant un élément d'insert (29) pourvu d'une portion de réception (31) destinée à recevoir l'élément de détection en treillis (17) et une portion de fermeture (33) destinée à fermer l'ouverture d'insert (15).

4. Système de détection en treillis selon la revendication 3, l'insert de détection (1) comportant un dispositif de positionnement (37) destiné à régler de manière variable le positionnement relatif entre la portion de réception (31) et la portion de fermeture (33) .

5. Système de détection en treillis selon la revendication 4, le dispositif de positionnement (37) étant conçu pour régler de manière variable la distance entre la portion de réception (31) et la portion de fermeture (33).

6. Système de détection en treillis selon l'une des revendications 3 à 5, l'élément d'insertion (29) comportant un évidement de réception (41) pourvu d'un fond d'évidement et d'un couvercle de fixation, et l'élément de détection en treillis (17) étant reçu dans l'évidement de réception (41) entre le fond d'évidement et le couvercle de fixation.

7. Système de détection en treillis selon l'une des revendications 1 à 6, l'insert de détection (1) comportant un dispositif à passages (42) pourvu d'un ou plusieurs passages (43) destinés au passage des lignes de connexion (27) de sorte que, lorsque l'insert de détection (1) est reçu dans le logement d'insert (7), les lignes de connexion (27) soient guidées hors du logement d'insert (7) au moyen du dispositif à passages (42).

8. Système de détection en treillis selon la revendication 7, une pluralité de lignes de connexion (27) étant guidées à travers au moins un des passages (43) .

9. Système de détection en treillis selon la revendication 7 ou 8, l'élément de détection en treillis (17) comportant un cadre de détection (19), les électrodes (23, 25) étant fixées dans le cadre de détection (19), les électrodes (23, 25) étant contactées par les lignes de connexion (27) et les lignes de connexion (27) étant disposées dans une zone située entre le cadre de détection (19) et le dispositif à passages (42) de manière à s'étendre sans contrainte de traction.

10. Système de détection en treillis selon l'une des revendications 1 à 9, la conduite d'entrée (3) et/ou la conduite de sortie (5) ayant une section intérieure qui varie le long du chemin d'écoulement (13).

11. Système de détection en treillis selon l'une des revendications 1 à 10, la conduite d'entrée (3) et/ou la conduite de sortie (5) comportant au moins une portion à section intérieure conique en direction du logement d'insert (7).

12. Système de détection en treillis selon l'une des revendications 1 à 11, le logement d'insert (7) comportant une cavité de logement (16), la cavité de logement (16) ayant une section transversale rectangulaire à coins arrondis dans une vue en coupe suivant un plan de coupe qui s'étend perpendiculairement à la direction d'insertion (y).

13. Système de détection en treillis selon l'une des revendications 1 à 12, le logement d'insert (7) comportant, en regard de l'ouverture d'insert (15), une autre ouverture pouvant être fermée.

14. Système de détection en treillis selon l'une des revendications 1 à 13, le guide d'écoulement (2) étant réalisé sous la forme d'un composant d'une seule pièce.
